# EUROPEAN PATENT SPECIFICATION

(11) **EP 0 610 349 B1**
(45) Date of publication and mention of the grant of the patent: **04.06.1997**
(21) Application number: 92922691.8
(22) Date of filing: 30.10.1992
(51) Int. Cl.: F16L 13/00, F16L 47/02, F16B 4/00, H02G 15/18

(54) **HEAT SHRINKABLE SLEEVE FOR CONNECTING A PIPE AND CABLE**
DURCH WÄRME SCHRUMPFBARE MUFFE ZUR VERBINDUNG VON ROHREN ODER KABELN
GAINE THERMORETRACTABLE SERVANT A RELIER UN TUYAU A UN CABLE

(30) Priority: 31.10.1991 KR 1927691
(43) Date of publication of application: 17.08.1994
(73) Proprietor: LG Cable & Machinery Ltd., Seoul 150-010 (KR)
(72) Inventor: CHOI, Jong Chul, An Yang-shi, Kyungki-do 430-080 (KR); KIM, You Hwan, Rm.204-503, Secondary Chookong, An Yang-shi, Kyungki-do 430-80 (KR); LEE, Jong Ho, An Yang-shi, Kyungki-do 430-080 (KR); KIM, Jun Sun, An Yang-shi, Kyungki-do 430-080 (KR); HWANG, In Hook, An Yang-shi, Kyungki-do 430-016 (KR)
(74) Representative: Grünecker, Kinkeldey, Stockmair & Schwanhäusser Anwaltssozietät
(86) International application number: KR9200054
(87) International publication number: WO9309372

(56) References cited:
- EP-B- 0 245 067
- DE-A- 3 319 168
- US-A- 4 359 502
- US-A- 4 877 660

## Description

### BACKGROUND OF THE INVENTION

### Field of the Invention

The present invention relates to a heat shrinkable sleeve for connecting a pipe and cable, and more particularly, to the heat shrinkable sleeve comprising a double layer of heat shrinkable sheet materials, a woven fabric made of synthetic fibres having a crack resistance, such as polyamides, polyesters, polypropylenes etc., and interposed between said layers of sheet materials, and a layer of high molecular polymers melt-attached at least to outer faces of the layers of the sheet materials. According to the present invention, the costs of equipment and production may be reduced owing to a simplified manufacturing process of the heat shrinkable sleeve.

### DESCRIPTION OF THE PRIOR ART

Generally, the connecting sleeves are wrapped around the connecting portions of oil pipelines, pipes for transporting chemical materials, gas pipes or all sorts of cables so as to protect the connecting portions against mechanical abrasion and corrosion due to inflow of moisture, or breakage resulting from invasion of insects and animals, and contact with chemical materials or all kinds of oils and the like.

EP 02 45 067 B1 discloses a heat recoverable article comprising a layer of polymeric material, a heating element and a layer of bonding material. The heating element is interposed between the polymeric material and the bonding material.

According to further embodiments disclosed by EP 02 45 067 B1 the heat recoverable article may also comprise two layers of polymeric material, a heater interposed therebetween, two layers of compatability disposed on outer faces of the polymeric material layer and a further layer of bonding material or three layers of polymeric material with connection layers and layers of woven glass fibres therebetween, whereby additionally a compatability layer and a bonding layer are disposited.

Correspondingly, the manufacturing processes and the application of such a heat recoverable article are quite complicated as a number of different layers are necessary for providing the heat recoverable article, see for example the compatability layers and the connection layers, and a bonding layer is only provided at a layer face of the heat recoverable article for directly fixing this article at an object. As the bonding layer is only provided at this lower face the article is normally more than once wrapped around the object to form a fusion bond between the bonding layer overlapping the heat recoverable article.

### SUMMARY OF THE INVENTION

Accordingly, it is an object of the present invention to provide a heat shrinkable sleeve that is easier to manufacture wherein the costs of equipment and production may be reduced, and which is easier to apply to an object.

According to the invention as defined in claim 1 a bonding layer is also deposited on the upper face of the heat shrinkable sleeve so that upon heating the sleeve the melting of bonding layers prevents the formation of gaps and, further, with the heat shrinkable sheet layers and the layers of high molecular polymer that are melted through the woven fabric layer arranged therebetween crack growth of the heat shrinkable sleeve is prevented and a perfect sealing state and an improved break resistance of the connecting portions is ensured by the melting of the polymer layers and the melting of the heat shrinkable sheet layers through the woven fabric layer.

Further advantages will become apparent in connection with the features of the subclaims.

### BRIEF DESCRIPTION OF THE DRAWINGS

The invention will become more readily apparent from the following description of preferred embodiments thereof shown, by way of example only, in the accompanying drawings in which:

Fig.1 is a perspective view, partly in section, illustrating a first embodiment of a heat shrinkable sleeve of the present invention.

Fig.2 is a sectional view illustrating a heat shrinkable sleeve with only one layer of heat shrinkable material, not falling within the scope of the claimed invention.

Fig.3 is a sectional view illustrating a second embodiment of the heat shrinkable sleeve of the present invention.

Fig.4 is a sectional view illustrating a third embodiment of the heat shrinkable sleeve of the present invention.

Fig.5 is a sectional view illustrating a heat shrinkable sleeve with only one layer of heat shrinkable material, not falling within the scope of the claimed invention.

Fig.6 is a diagrammatic illustration of shrunk state of a heat shrinkable sheet material of the present invention.

### DESCRIPTION OF THE PREFERRED EMBODIMENTS

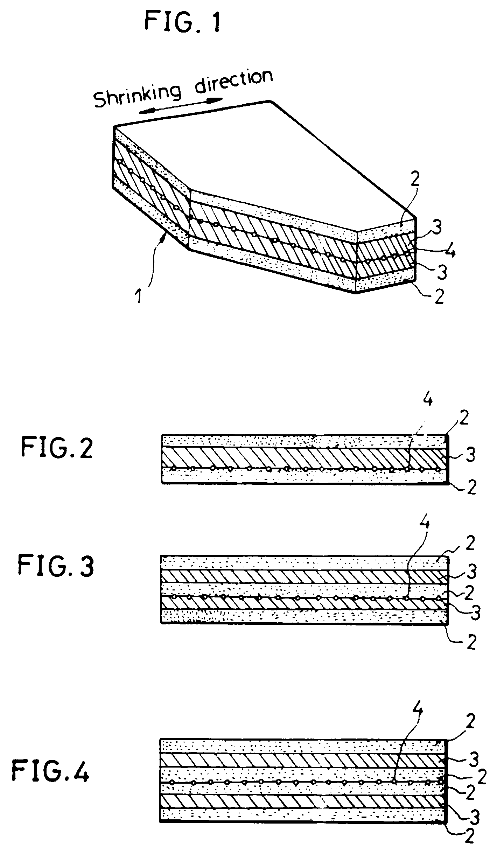

Referring now to the drawings, and particularly to Fig.1, there is shown a heat shrinkable sleeve 1 comprising heat shrinkable sheet materials 3 capable of shrinkage in a certain direction by the application of heat, a woven fabric 4 of synthetic fibers interposed between the sheet materials 3, and high molecular polymers 2 melt-adhered to both faces of the sheet materials 3. In this embodiment, when the heat is applied to the sheet materials 3 which are formed by cross-linking polymers with organoperoxides and silanes etc. and elongating them, the high molecular polymers 2 melt, the sheet materials 3 shrink and therefore the woven fabric 4 of synthetic fibers is shrunk closely and adhered fixedly between the sheet materials 3. The heat shrinkable sleeve 1 allows conneting portions to be sealed closely and to be protected from the outside environment with an improved break resistance thereof.

Referring now to Fig.2, there is illustrated a heat shrinkable sleeve 1, which comprises only one layer of a heat shrinkable sheet material 3, a woven fabric 4 positioned only one side of the sheet material 3 and made of synthetic fibers, e.g., polyamides, polyesters, polypropylenes or the like, and high molecular polymers 2 melt-adhered to both faces of the sheet material 3.

Fig.3 shows a heat shrinkable sleeve 1 constructed in accordance with the second embodiment of the invention. The heat shrinkable sleeve comprises one layer of high molecular polymer 2, a woven fabric 4 of synthetic fibers, which is positioned at one side of the polymer 2, heat shrinkable sheet materials 3 attached to both faces of the polymer 2 and the other layers of high molecular polymers 2 attached to both of the sheet materials 3.

Fig.4 illustrates a heat shrinkable sleeve 1 constructed according to the third embodiment of this invention. The heat shrinkable sleeve 1 consists of a woven fabric 4, the first layers of high molecular polymers 2 adhered to both faces of the woven fabric 4, heat shrinkable sheet materials 3 attached to both of the first high molecular polymers 2,and the second layers of high molecular polymers 2 attached to both of the sheet materials 3.

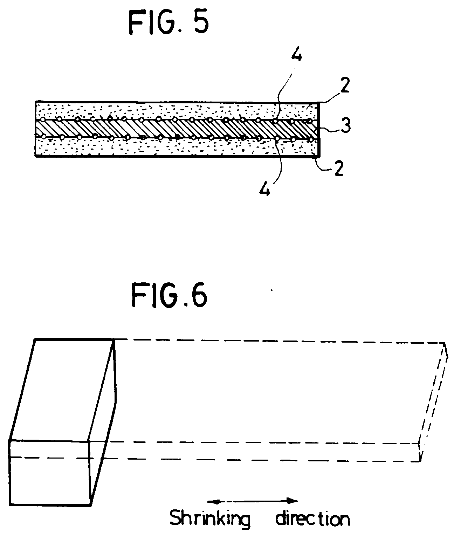

Referring now to Fig.5, there is shown another heat shrinkable sleeve 1, which comprises only one layer of heat shrinkable sheet material 3, woven fabrics 4 attached to both faces of the sheet material 3 and high molecular polymers 2 adhered to both of the woven fabrics 4. The woven fabric 4 may have various weave configurations, for example, woof weave including plain weave, rubber weave and pulp weave, and warp weave including tricot and double cloth.

Preferably, the heat shrinkable sheet materials 3 consist of cross-linked high molecular polymers 2, and the woven fabrics 4 are made of monofilaments, multifilaments and staple yarns and have flexibility such that they do not impede shrinkage when the sheet materials 3 are shrunk by the application of heat to them.

In addition, the materials of these woven fabrics 4 may generally include polyamides, e.g., nylon 6, nylon 11, nylon 12, nylon 66, nylon 610 and nylon 612, polypropylenes, e.g., polypropylene, polypropylene impact copolymer, polypropylene random copolymer, polypropylene ethylene copolymer or the like, and polyesters, e.g., polybutylene terephthalate, polyethylene terephthalate and the like.

On the other hand, the high molecular polymers 2 and woven fabrics 4 preferably comprise materials which do not shrink after they have been subjected to heat and do not prevent the shrinkage of the heat shrinkable sheet materials 3 during heat shrinkage.

In order to ensure a perfect-sealing state and an improved break resistance of the connecting portions of pipes and various types of cables, the preferred sleeve having dimensional stability may be manufactured by using the laminated heat shrinkable sheet materials 3 and woven fabrics 4 as needed, especially applying heat activated adhesives, sealing materials or thermopaints and using the woven fabrics 4 which contain reinforcing materials, such as fiber glass or the like.

On the other hand, the heat shrinkable sleeve is shrunk from the shrinkage of the heat shrinkable sheet materials and such shrinkage operation is shown in Fig.6.

Breaking strength, i.e., sleeve state after shrinkage, break resistance and notch test were performed on the heat shrinkable sleeve of the present invention. According to the embodiment of Fig.3, under the conditions of a temperature of 180°C, a pressure of 2kg/cm² and a heating period of 5 minutes, the heat shrinkable sleeve was prepared by elongating the heat shrinkable sheet materials 3 to have elongation of about 500%, interposing the woven fabric 4 of nylon 6(20/10) between the sheet materials 3, and attaching the high molecular polymers 2 to both layers of the sheet materials 3.

The test results are represented in the following table.

**Table**

| Test items | Unit | Test condition | result |
|---|---|---|---|
| Breaking strength (articles after shrinkage) | kg | Tensile speed: 200mm/min | 500 |
| Break resistance against damage | | | |
| Notch test | | 175°C, 15 minutes | |

Likewise, as a result of testing breaking strength and break resistance against drmage being performed on the shrinkable sleeve of Fig.2, Fig.4 and Fig.5, using polyesters and polypropylenes as the materials of the woven fabrics, there were shown the breaking strength of 300% or more and the good break resistance.

According to this invention, the manufacturing processes of the sleeves may be simplified and therefore the costs of equipment and production thereof may be reduced since it is not necessary to use netlike fabrics cross-linked heat shrinkable fibers with reinforcing fibers as is well known in the art, wherein the manufacturing processes mainly consist of the following steps: interposing the woven fabrics, such as polyamides, polyesters, polypropylenes or the like, between the sheet materials to provide break resistance, and attaching the high molecular polymers to the woven fabrics by melting.

## Claims

1. A heat shrinkable sleeve (1) for connecting a pipe and cable, comprising a double layer of heat shrinkable sheet material (3) capable of shrinkage in a certain direction by the application of heat, a woven fabric (4) of synthetic fibers, such as polyamides, polypropylenes or polyesters, interposed between said layers of sheet material, and a layer of high molecular polymers (2) melt-adhered at least to outer faces of the layers of said sheet material.

2. The heat shrinkable sleeve of claim 1, wherein the woven fabric (4) takes the form of woof weave, such as plain weave, rubber weave or rubber weave and warp weave, such as tricot and double cloth.

3. The heat shrinkable sleeve of claim 1, wherein the woven fabric (4) have flexibility such that it does not impede shrinkage of the heat shrinkabe sheet materials during heat shrinkage.

4. The heat shrinkable sleeve of claim 1 or claim 3, wherein the woven fabric (4) is made of monofilaments, multifilaments and staple yarns.

5. The heat shrinkable sleeve of claim 1 or claim 3, wherein the materials of the woven fabric (4) are polyamides, such as nylon 6,nylon 11,nylon 12, nylon 66, nylon 610 and nylon 612.

6. The heat shrinkable sleeve of claim 1 or claim 3, wherein the materials of the woven fabric (4) are polypropylenes, such as polypropylene, polypropylene impact copolymer, polypropylene random copolymer and polypropylene ethylene copolymer.

7. The heat shrinkable sleeve of claim 1 or claim 3, wherein the materials of the woven fabric (4) are polyesters, such as polybutylene terephthalate and polyethylene terephthalate.

8. The heat shrinkable sleeve of claim 1, wherein the heat shrinkable sheet material (3) consists of the cross-linked high molecular polymers.

9. The heat shrinkable sleeve of claim 1 or claim 3, wherein the high molecular polymers and woven fabric (4) comprise materials, which do not shrink after they have been subjected to heat and do not prevent the shrinkage of the heat shrinkable sheet material.

10. The heat shrinkable sleeve of claim 1, which sleeve (1) is applied with heat activated adhesives and sealing materials.

11. The heat shrinkable sleeve of claim 1, which sleeve (1) is applied with thermopaints and is covered with a sheet for preventing the heat shrinkable sheet material from scratching.

12. The heat shrinkable sleeve of claim 1, which sleeve (1) comprises a layer of high molecular polymer (2), a woven fabric (4) attached to one side of the polymer, layers of heat shrinkable sheet materials (3) adhered to both faces of the layer of polymer and the other layers of high molecular polymers (2) attached to outer faces of the layers of the sheet materials (3).

13. The heat shrinkable sleeve of claim 1, which sleeve (1) consists of a woven fabric (4), first layers of high molecular polymers (2) adhered to both faces of the woven fabric (4), the layers of heat shrinkable sheet materials (3) attached to outerfaces of the layers of the first high molecular polymers (2), and second layers of high molecular polymers (2) attached to outerfaces of said layers of the sheet materials (3).

## Patentansprüche

1. Eine durch Wärmung schrumpfbare Muffe (1) zur Verbindung von Rohren und Kabeln mit einer Doppelschicht aus einem durch Wärme schrumpfbaren Folienmaterial (3), welches durch Anwendung von Wärme in einer bestimmten Richtung schrumpfen kann, einer gewebten Bespannung (4) aus synthetischen Fasern, wie Polyamid, Polypropylen oder Polyester, die zwischen den Schichten des Folienmaterials angeordnet ist, und einer Schicht aus hochmolekularen Polymeren (2), die wenigstens an Außenseiten der Schichten des Folienmaterials anhaften.

2. Muffe nach Anspruch 1, wobei die gewebte Bespannung (4) in Form eines Einschußgewebes, wie einfaches Gewebe, Gummigewebe oder Zellstoffgewebe, oder in Form eines Kettengewebes, wie Trikot und Doppelstoff vorliegt.

3. Muffe nach Anspruch 1, wobei die gewebte Bespannung (4) eine das Schrumpfen des durch Wärme schrumpfbaren Muffenmaterials während des Wärmeschrumpfens nicht behindernde Flexibilität aufweisen.

4. Muffe nach Anspruch 1 oder 3, wobei die gewebte Bespannung aus Einzelfäden, Vielfachfäden oder Stapelfäden gebildet ist.

5. Muffe nach Anspruch 1 oder 3, wobei die Materialien der gewebten Bespannung (4) Polyamide wie Nylon 6, Nylon 11, Nylon 12, Nylon 66, Nylon 610 und Nylon 612 sind.

6. Muffe nach Anspruch 1 oder 3, wobei die Materialien der gewebten Bespannung (4) Polypropylene, wie Polypropylen, ein Polypropylenimpaktkopolymer, ein Polypropylenzufallskopolymer und ein Polypropylenethylenkopolymer sind.

7. Muffe nach Anspruch 1 oder 3, wobei die Materialien der gewebten Bespannung (4) Polyester, wie Polybutylenterephthalat und Polyethylenterephthalat sind.

8. Muffe nach Anspruch 1, wobei das durch Wärme schrumpfbare Folienmaterial (3) aus quervernetzten hochmolekularen Polymeren besteht.

9. Muffe nach Anspruch 1 oder 3, wobei die hochmolekularen Polymere und die gewebte Bespannung (4) Materialien enthalten, die nach Anwenden von Wärme nicht schrumpfen und gleichzeitig das Schrumpfen des durch Wärme schrumpfbaren Folienmaterials nicht behindern.

10. Muffe nach Anspruch 1, wobei die Muffe (1) mit wärmeaktivierbaren Klebern und Dichtmaterialien versehen ist.

11. Muffe nach Anspruch 1, wobei die Muffe (1) mit Wärmefarben versehen ist und mit einer Folie bedeckt ist, durch die ein Verkratzen des durch Wärme schrumpfbaren Folienmaterials verhindert ist.

12. Muffe nach Anspruch 1, wobei die Muffe (1) eine Schicht aus einem hochmolekularen Polymer (2), eine auf einer Seite des Polymers angeordnete, gewebte Bespannung (4), Schichten von durch Wärme schrumpfbaren Folienmaterialien (3), die auf beiden Seiten der Polymerschicht haften, und weitere Schichten aus hochmolekularen Polymeren (2) aufweist, welche auf Außenseiten der Schichten aus Folienmaterialien (3) aufgebracht sind.

13. Muffe nach Anspruch 1, wobei die Muffe (1) aus einer gewebten Bespannung (4), ersten Schichten aus hochmolekularen Polymeren (2), die auf beiden Seiten der gewebten Bespannung (4) haften, den Schichten aus den durch Wärme schrumpfbaren Folienmaterialien (3), die auf Außenseiten der Schichten aus den ersten hochmolekularen Polymeren (2) aufgebracht sind, und zweiten Schichten von hochmolekularen Polymeren (2) gebildet ist, welche auf Außenseiten der Schichten der Folienmaterialen (3) aufgebracht sind.

## Revendications

1. Gaine thermorétractable (1) pour raccorder un tuyau et un câble, comprenant une double couche de matière en feuille thermorétractable (3) capable de se rétracter dans une certaine direction par l'application de chaleur, une étoffe tissée (4) de fibres synthétiques telles que des polyamides, polypropylènes ou polyesters, intercalée entre lesdites couches de matière en feuille, et une couche de polymères de haut poids moléculaire (2) adhérant à l'état fondu au moins aux faces extérieures des couches de ladite matière en feuille.

2. Gaine thermorétractable selon la revendication 1, dans laquelle l'étoffe tissée (4) prend la forme d'une armure en trame ("woof weave") tel que l'armure toile ("plain weave"), l'armure caoutchouc ("rubber weave") ou l'armure pâte ("pulp weave"), et d'une armure en chaîne ("warp weave"), comme le tricot et le tissu double.

3. Gaine thermoréactractable selon la revendication 1, dans laquelle l'étoffe tissée (4) a de la flexibilité, de sorte qu'elle n'empêche pas le retrait des matières en feuille thermorétractables pendant la thermorétraction.

4. Gaine thermorétractable selon la revendication 1 ou la revendication 3, dans laquelle l'étoffe tissée (4) est faite de monofilaments, de multifilaments et de fils discontinus.

5. Gaine thermorétractable selon la revendication 1 ou la revendication 3, dans laquelle les matières de l'étoffe tissée (4) sont des polyamides tels que le nylon 6, le nylon 11, le nylon 12, le nylon 66, le nylon 610 et le nylon 612.

6. Gaine thermorétractable selon la revendication 1 ou la revendication 3, dans laquelle les matières de l'étoffe tissée (4) sont des polypropylènes tels que le polypropylène, un copolymère de polypropylène-choc, un copolymère de polypropylène statistique et un copolymère polypropylène éthylène.

7. Gaine thermorétractable selon la revendication 1 ou la revendication 3, dans laquelle les matières de l'étoffe tissée (4) sont des polyesters tels qu'un téréphtalate de polybutylène et un téréphtalate de polyéthylène.

8. Gaine thermorétractable selon la revendication 1, dans laquelle la matière en feuille thermorétractable (3) est constituée par les polymères de haut poids moléculaire réticulés.

9. Gaine thermorétractable selon la revendication 1 ou la revendication 3, dans laquelle les polymères de haut poids moléculaire et l'étoffe tissée (4) comprennent des matières qui ne se rétractent pas après avoir été soumises à de la chaleur et n'empêchent pas le retrait de la matière en feuille thermorétractable.

10. Gaine thermorétractable selon la revendication 1, cette gaine (1) étant appliquée avec des adhésifs activés à chaud et des matières d'étanchéité.

11. Gaine thermorétractable selon la revendication 1, cette gaine (1) étant appliquée avec des peintures thermiques et étant recouverte avec une feuille pour empêcher la matière en feuille thermorétractable de se rayer.

12. Gaine thermorétractable selon la revendication 1, cette gaine (1) comprenant une couche de polymère de haut poids moléculaire (2), une étoffe tissée (4) fixée à un côté du polymère, des couches de matières en feuille thermorétractables (3) adhérant aux deux faces de la couche de polymère, et les autres couches de polymères de haut poids moléculaire (2) fixées aux faces extérieures des couches des matières en feuilles (3).

13. Gaine thermorétractable selon la revendication 1, cette gaine (1) étant constituée par une étoffe tissée (4), des premières couches de polymères de haut poids moléculaire (2) adhérant aux deux faces de l'étoffe tissée (4), les couches de matières en feuille thermorétractables (3) fixées aux faces extérieures des couches des premiers polymères de haut poids moléculaire (2), et des secondes couches de polymères de haut poids moléculaire (2) fixées aux faces extérieures desdites couches des matières en feuille (3).
